# EUROPÄISCHE PATENTSCHRIFT

(11) **EP 4 208 276 B1**
(45) Veröffentlichungstag und Bekanntmachung des Hinweises auf die Patenterteilung: **31.07.2024**
(21) Anmeldenummer: 21769464.5
(22) Anmeldetag: 01.09.2021
(51) Int. Cl.: B01D 27/08, A47J 31/06, A47J 31/60, B01D 29/11, B01D 29/96, B01D 35/153, C02F 1/00, B01D 35/027

(54) **FILTER MIT ZENTRIERUNG**
FILTER HAVING A CENTERING DEVICE
FILTRE COMPORTANT UN DISPOSITIF DE CENTRAGE

(30) Priorität: 03.09.2020 DE 102020123008; 22.03.2021 DE 102021107068
(43) Veröffentlichungstag der Anmeldung: 12.07.2023
(73) Patentinhaber: ACLARIS GmbH, Lindau Zweigniederlassung Rebstein, 9445 Rebstein (CH)
(72) Erfinder: WALLERSTORFER, Kurt, 5204 Strasswalchen (AT)
(74) Vertreter: Otten, Roth, Dobler & Partner mbB Patentanwälte
(86) Internationale Anmeldenummer: PCT/EP2021/074140
(87) Internationale Veröffentlichungsnummer: WO 2022/049129

(56) Entgegenhaltungen:
- EP-A1- 2 138 078
- WO-A2-2008/017492
- US-A1- 2006 054 547
- US-A1- 2010 025 317

## Beschreibung

Die Erfindung betrifft eine Filterpatrone nach dem Oberbegriff des Anspruchs 1.

In wasserführenden Haushaltsmaschinen mit einem Wassertank, insbesondere in Getränkemaschinen, wie Kaffeemaschinen, Teemaschinen, etc., werden regelmäßig Filterpatronen eingesetzt, um die Wasserqualität entsprechend der vorgesehenen Anwendung zu verbessern. Häufig werden in solchen Filterpatronen Filtermedien zur Wasserenthärtung, wie z.B. Ionentauscherharz, oder zur Geschmacksverbesserung, wie z.B. Aktivkohle, verwendet. Auch die dosierte Zugabe von Zusatzstoffen, z.B. für die Gesundheit oder Geschmacksverbesserung, wie die Zugabe von Mineralien oder Vitaminen, etc., wird bereits in Kombination mit Filtermedien vorgesehen.

Wassertanks derartiger Maschinen nach dem Stand der Technik weisen regelmäßig am Tankboden Anschlussstrukturen mit einer ringförmigen Dichtfläche zum dichten Anschluss eines Anschlusselementes der für einen solchen Tank vorgesehenen Filterpatrone auf, die eine Durchflussöffnung im Tankboden zum Durchfluss des Wassers aus der Filterpatrone und dem Wassertank zur Haushaltsmaschine umschließen.

In den Druckschriften EP 2 138 078 A1 und WO 2008/017492 werden Wassertanks und Filterpatronen mit äußeren Zentrierelementen offenbart.

Andere Wassertanks und Filterpatronen sind beispielsweise in den Druckschriften DE 10 2204 049 877 A1, EP 1 867 606 A1 und DE 197 17 054 C2 beschrieben.

In diesen Druckschriften wird eine Fixierung der Filterpatrone am Tankboden auf unterschiedliche Arten, z. B. mit einer mit einem Schnapprand versehenen Dichtung, einem Bajonettverschluss oder einem Schraubverschluss beschrieben.

Schraub- und Bajonettverschlüsse haben den Nachteil, dass sie eine Drehbewegung mit einer linearen Bewegung beim Herstellen der Verbindung überlagern, was in eng geformten Wassertanks schwierig zu bewerkstelligen ist und zudem entsprechend belastbare, elastische Dichtungen erfordert.

Ein Schnapprand ermöglicht zwar das einfache Einsetzen der Filterpatrone in einer linearen Steckbewegung, ist jedoch mit Einschränkungen hinsichtlich der Formgebung der Dichtfläche verbunden.

Aufgabe der Erfindung ist es daher, eine solche Filterpatrone und einen zugehörigen Wassertank ohne die vorgenannten Nachteile vorzuschlagen.

Diese Aufgabe wird ausgehend von einer Filterpatrone nach dem Oberbegriff des Anspruchs 1 durch dessen kennzeichnende Merkmale gelöst.

Im Folgenden werden allgemein dem Wassertank zuzuordnende Elemente mit dem zuordnenden Wortanfang "Tank" und der Filterpatrone zuzuordnende Elemente mit dem zuordnenden Wortanfang "Filter" versehen. Merkmale vorteilhafter Ausführungen und Weiterbildungen der Erfindung werden im Folgenden so beschrieben, dass sie nicht zwingend vorhanden sind, jedoch vorhanden sein können.

Die erfindungsgemäße Filterpatrone ist mit einem Filtergehäuse versehen, dessen Wandung eine Gehäuseinnenseite von einer Gehäuseaußenseite trennt, wobei eine im Betrieb der Filterpatrone gegenüber der äußeren Umgebung des Filtergehäuses offene Filtereinlassöffnung vorgesehen ist. Dadurch unterscheidet sich die Filterpatrone von Filtervorrichtungen, deren Gehäuse mit druckfesten Anschlüssen dicht an Wasserleitungen eines Wassernetzes angeschlossen und so in das Wassernetz eingebunden werden.

Weiterhin weist eine erfindungsgemäße Filterpatrone bezogen auf die Strömungsrichtung im Betrieb, im Anschluss an die Filtereinlassöffnung eine Vorrichtung zur Wasserleitung im Inneren des Filtergehäuses auf, die wenigstens eine, wenigstens ein Filtermedium aufweisende Filterkammer umfasst und in einer Filterauslassöffnung zum Absaugen von Wasser aus der Filterpatrone endet. Weiterhin ist ein ringförmiger Filteranschluss für den Anschluss der Filterpatrone in einem Wassertank vorgesehen.

Ausgehend von einer derartigen Filterpatrone und einem derartigen Wassertank nach dem Oberbegriff der Ansprüche 1 und 10 wird die o.a. Aufgabe durch deren kennzeichnende Merkmale gelöst.

Dementsprechend ist bei einer erfindungsgemäßen Filterpatrone innerhalb der Filterdichtfläche des Filteranschlusses eine filterseitige Führungsstruktur zur Aufnahme eines tankseitigen Zentrierelementes zur Fixierung der Filterpatrone vorgesehen. Die Positionierung und die Fixierung sind somit einfach durch ein vom Tankboden abstehendes Zentrierelement zu bewerkstelligen. Da die Dichtfläche selbst unabhängig von einem derartigen Zentrierelement gestaltet werden kann, besteht eine größere konstruktive Freiheit sowohl bei der Gestaltung der Dichtfläche oder der Dichtung als auch des Zentrierelementes.

Eine filterseitige Führungsstruktur zur Aufnahme des Zentrierelementes beim Einsetzen der Filterpatrone in den Wassertank bildet eine Auslassleitung der Filterpatrone, die stromabwärts am Ende der Filterstrecke angeordnet ist. Durch diese Doppelfunktion der filterseitigen Führungsstruktur, die neben der Fixierung auch der Wasserführung dient, ergibt sich eine platzsparende Ausführung.

Die filterseitige Führungsstruktur weist in besonderen Ausführungsformen eine oder mehrere schräg gegenüber der Montagerichtung der Filterpatrone ausgerichtete Führungsschrägen auf. Solche schräg angeordneten Führungselemente sind geeignet, die Positionierung der Filterpatrone bei der Montage quer zur Montagerichtung zu erleichtern, da ein entsprechender Anschlag eines tankseitigen Zentrierelementes an einer Führungsschräge gleiten und dabei die Filterpatrone in die Endposition lenken kann. Hierzu können auch mehrere Führungsschrägen vorgesehen werden.

Vorzugsweise sind die Führungsschräge oder die Führungsschrägen als Zentrierhilfe auf eine zentrale Achse der filterseitigen Führungsstruktur hingerichtet, sodass die Führungsstruktur beim Aufstecken auf ein entsprechend ausgebildetes tankseitiges Zentrierelement zentriert wird.

Die filterseitige Führungsstruktur kann koaxial zu einer die Führungsstruktur umschließenden Filterdichtfläche ausgebildet und angeordnet sein. Diese mittige Anordnung ermöglicht die gleichmäßige Verteilung des offenen Durchflussquerschnittes für das Wasser durch die filterseitige Führungsstruktur.

Die filterseitige Führungsstruktur kann beispielsweise eine oder mehrere zu einer zentralen Achse A parallel verlaufende und/oder eine oder mehrere hierzu schräg angeordnete Führungsflächen aufweisen. An der schrägen Führungsfläche kann eine Filterpatrone beim Aufstecken auf ein tankseitiges Zentrierelement zunächst zentriert und im Anschluss daran mittels der achsenparallelen Führungsfläche zentral ausgerichtet weiter axial verschoben werden, beispielsweise zur Herstellung eines dichtenden und/oder fixierenden Formschlusses mit einer Dicht- und/oder Fixierfläche.

Vorteilhafterweise werden zudem Halte- oder Rastelemente in der filterseitigen Führungsstruktur angebracht. Hierdurch sind Ausführungen möglich, die ganz oder teilweise innen gehalten werden, so dass äußere Fixiermittel entfallen oder zumindest reduziert werden können.

Vorteilhafterweise ist zudem in der filterseitigen Führungsstruktur eine Aufnahme für ein Steckelement eines Tankventils vorgesehen, das das tankseitige Zentrierelement durchsetzt. Ein solches Steckelement muss in der Führungsstruktur der Filterpatrone beweglich untergebracht werden und darf bei der Montage der Filterpatrone nicht festgesetzt werden, da ansonsten die Funktion des Tankventils verhindert wird. Ein solches Steckelement stellt so eine zusätzliche Kodierung zur Verhinderung der Verwendung einer nicht geeigneten Filterpatrone dar.

Weiterhin ist es von Vorteil, wenn das tankseitige Zentrierelement und das Tankventil so aneinander angepasst werden, dass sich eine Kodierung des Tankventils mit dem Zentrierelement ergibt. Ein Tank mit einem so gestalteten Tankventil kann also nur in Verbindung mit einem passenden Zentrierelement betrieben werden. In einer besonderen Ausführungsform der Erfindung greift das Steckelement des Tankventils in einen Durchlass des Zentrierelements.

Die Führungsstruktur der Filterpatrone kann eine oder mehrere Führungsnuten zur Aufnahme tankseitiger Strukturen aufweisen. Dadurch ergibt sich eine Art Nut und Feder Struktur bei der Filterzentrierung und -fixierung, sodass auch die Winkelposition der Filterpatrone fixiert ist. Zudem ergeben sich dadurch weitere Kodierungsmöglichkeiten.

Auch die eine oder mehrere Führungsschrägen der filterseitigen Führungsstruktur können in einer oder mehreren Führungsnuten zur Aufnahme tankseitiger Strukturen angebracht sein.

Ein zu einer oben beschriebenen Filterpatrone passender Wassertank für eine Haushaltsmaschine ist wie einleitend erwähnt mit einem Tankboden versehen, wobei am Tankboden eine ringförmige Tankdichtfläche zum dichten Anschluss der Filterpatrone vorgesehen ist, die eine Tankdurchgangsöffnung zum Durchfluss des Wassers aus der Filterpatrone durch die Wandung des Tankbodens zur Haushaltsmaschine umschließt. Weiterhin ist ein innerhalb der Tankdichtfläche vom Tankboden in Richtung der Montageposition der Filterpatrone abstehendes Zentrierelement zum Einstecken in die Führungsstruktur der Filterpatrone vorgesehen.

An dem Zentrierelement ist dabei wenigstens ein Wasserdurchlass für Wasser aus der Filterpatrone durch die Führungsstruktur einer aufgesteckten Filterpatrone zur Tankdurchgangsöffnung vorgesehen. Dadurch kann das Zentrierelement wenigstens teilweise an der Innenwand der filterseitigen Führungsstruktur anliegen, ohne den Wasserdurchfluss zu behindern.

Die Tankdichtfläche ist vorteilhafterweise separat vom Zentrierelement ausgebildet und angeordnet, wodurch diese beiden Elemente weitgehend unabhängig voneinander ausgestaltet werden können und sich nicht gegenseitig beeinflussen.

Eine Möglichkeit, eine oder mehrere Durchflussöffnungen für das Wasser vorzusehen, besteht beispielsweise darin, dass das Zentrierelement sich in Fließrichtung des Wassers im Betrieb erstreckende Rippen umfasst, deren Zwischenraum einen Wasserdurchlass bilden. Die Rippen können dann außenseitig in radialer Richtung an der filterseitigen Führungsstruktur anliegen.

Wird das Zentrierelement mit sternförmig angeordneten Rippen ausgebildet, ergibt sich eine gleichmäßige Verteilung des offenen Fließquerschnittes für das Wasser und zugleich eine umfangseitig gleichmäßige Anlage und damit Fixierung der filterseitigen Führungsstruktur der Filterpatrone.

Wenigstens eine, bevorzugt mehrere oder alle Rippen des Zentrierelements werden mit einer oberen Führungsschräge zur Führung der filterseitigen Führungsstruktur bei der Montage der Filterpatrone versehen. Diese Führungsschräge oder Führungsschrägen können dann mit der oder den korrespondierenden Führungsschrägen der Führungsstruktur der Filterpatrone wechselwirken. Zudem kann wenigstens eine zur zentralen Achse parallel verlaufende Führungsfläche des Zentrierelementes für eine axial ausgerichtete Führung der Filterpatrone nach der Zentrierung beim weiteren Auf- und/oder Einstecken vorgesehen sein.

Weiterhin können Halte- oder Rastelemente an dem Zentrierelement angebracht sein, die an entsprechende Halte- oder Rastelemente der Führungsstruktur der Filterpatrone angepasst sind.

Weiterhin ist es von Vorteil, wenn das Zentrierelement an einem Befestigungsring zur Befestigung am Tankboden angebracht ist. Auf diese Weise können unterschiedliche Befestigungsringe mit spezifischen Zentrierelementen für gleich ausgebildete Wassertanks verwendet werden, die somit für verschiedene Haushaltsmaschinen wie Getränkemaschinen etc. spezifiziert werden.

Ein Ausführungsbeispiel der Erfindung ist in der Zeichnung dargestellt und wird anhand der Figuren nachfolgend näher erläutert.

Im Einzelnen zeigen
Fig.1 eine perspektivische Darstellung eines Tankbodens mit eingesetzter Filterpatrone nach dem Stand der Technik,
Fig.2 eine perspektivische Explosivdarstellung eines Tankbodens mit Zentrierelement und Befestigungsring,
Fig.3 eine perspektivische Darstellung des Tankbodens gemäß Fig. 2 mit eingebautem Zentrierelement und eingebautem Befestigungsring,
Fig.4 eine Draufsicht auf den Tankboden gemäß den Figuren 2 und 3,
Fig.5 eine perspektivische Darstellung des Anschlussbereiches der Filterpatrone von der Seite betrachtet,
Fig.6 eine perspektivische Darstellung des Anschlussbereiches der Filterpatrone von schräg unten betrachtet,
Fig.7 eine perspektivische Darstellung einer auf Höhe des Filteranschlussstutzens aufgeschnittenen Filterpatrone, eingesetzt in einen Tankboden,
Fig.8 eine perspektivische Darstellung einer auf Höhe der Führungsnuten aufgeschnittenen Filterpatrone, eingesetzt in einen Tankboden,
Fig. 9 eine perspektivische Darstellung einer Filterpatrone, eingesetzt in einen Tankboden,
Fig. 10 eine perspektivische Darstellung des Zentrierelementes,
Fig. 11 eine Schnittdarstellung eines Tankbodens ohne Filterpatrone bei geöffnetem Wassertankventil,
Fig. 11a und b zwei Ausschnittvergrößerungen aus Fig. 11 zur Veranschaulichung einer verschließbaren Bypassleitung in der Tankdichtung,
Fig. 12 eine Schnittdarstellung eines Tankbodens gemäß Fig. 11 mit eingesetzter Filterpatrone,
Fig. 12a eine Ausschnittvergrößerung aus Fig. 12 zur Veranschaulichung der geschlossenen Bypassleitung,
Fig. 13 eine schematische Stirnansicht eines erfindungsgemäßen Filteranschlussstutzens,
Fig. 13a eine Ausschnittvergrößerung aus Fig. 13 und
Fig. 14 einen den Anschlussbereich zeigenden Ausschnitt der Filterpatrone zur Veranschaulichung einer Führungshilfe durch Abschrägungen des Anschlussstutzens.

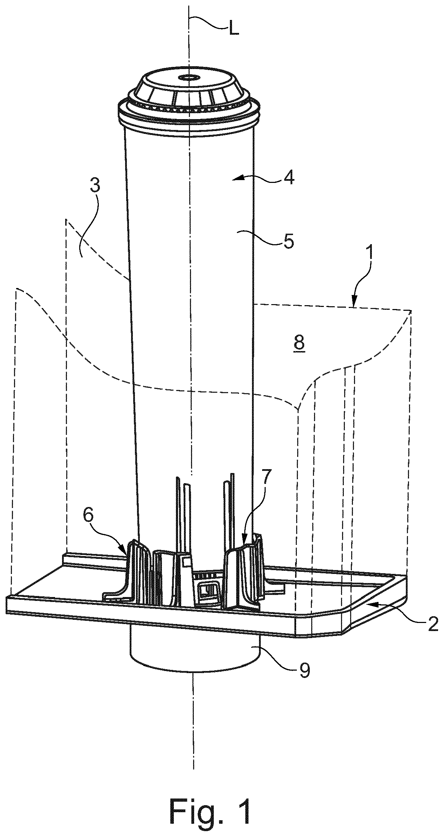

Fig. 1 veranschaulicht die übliche Ausgestaltung eines Wassertanks 1 einer Getränkemaschine, wie einer Kaffeemaschine, z.B. eines Kaffeevollautomaten nach dem Stand der Technik. Der Wassertank 1 umfasst einen Tankboden 2 und mit gestrichelten Linien teilweise dargestellten Wassertankseitenwänden 3. Eine Filterpatrone 4 mit einem Filtergehäuse 5 ist in den Wassertank 1 eingesetzt. Der Anschluss zwischen dem Tankboden 2 und der Filterpatrone 4 wird über Tankanschlusselemente 6 auf Seiten des Wassertanks und filterseitige Filteranschlusselemente 7 realisiert.

Die Filterpatrone 4 befindet sich im Innenraum 8 des Wassertanks 1, d. h. sie steht im Betrieb ganz oder teilweise in dem im Wassertank 1 bevorrateten Wasser. Ein Filteranschlussstutzen 9 des Wassertanks 1 für den Anschluss des Wassertanks 1 an die nicht dargestellte Getränkemaschine steht von der Unterseite des Wassertanks 1 ab.

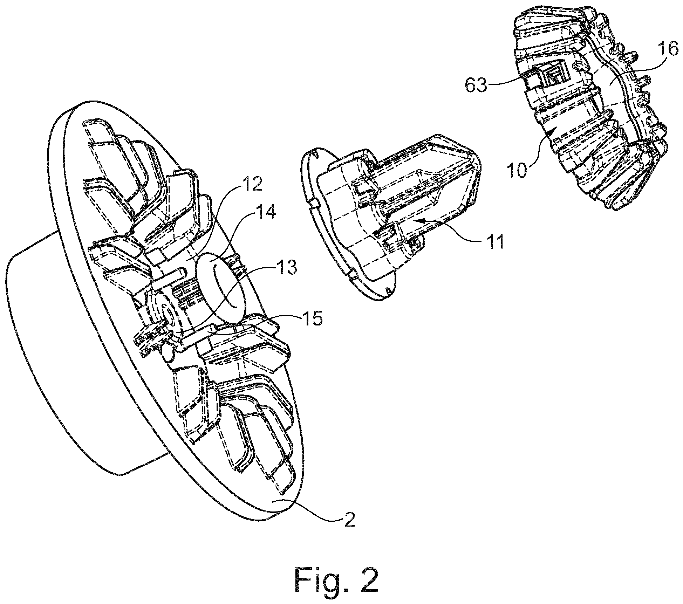

In Fig. 2 ist ein runder Ausschnitt des Tankbodens 2 dargestellt, wobei ein Befestigungsring 10 und ein Zentrierelement 11 zum Einlegen in eine Vertiefung 12 des Tankbodens 2 vorgesehen sind. Ein Tankventilkörper 13 mit einer als O-Ring ausgebildeten Dichtung 14, von dem zwei Pins 15 nach oben abstehen, ist ebenfalls in Fig. 2 zu sehen. Der Befestigungsring 10 trägt weiterhin eine Elastomerdichtung 16.

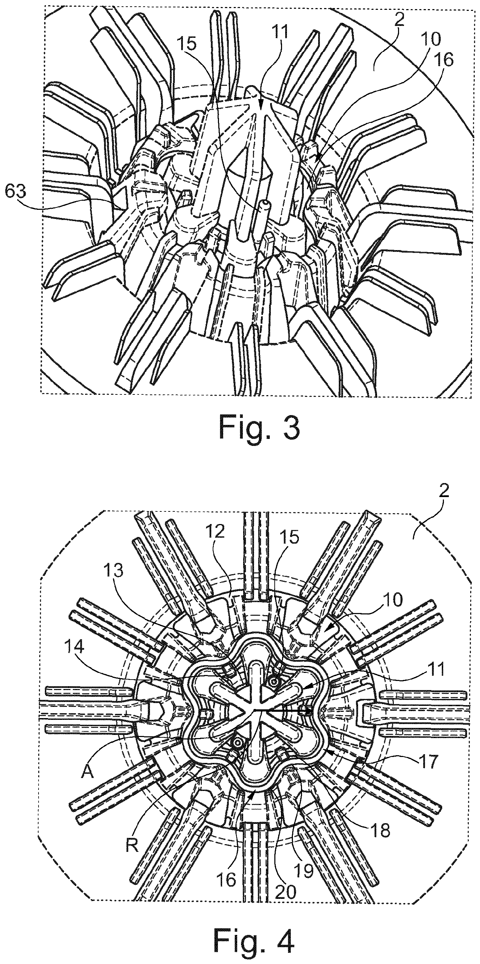

In der Fig. 3 und 4 sind der Befestigungsring 10 und das Zentrierelement 11 in den Tankboden 2 eingebaut. Hier ist erkennbar, dass die Pins 15 das Zentrierelement durchsetzen können und so Kodierelemente für die Kodierung des Wassertanks gegenüber dem zugehörigen Maschinenanschluss bilden, von dem beim Einsetzen des Wassertanks der Tankventilkörper 13 betätigt werden muss. Weiterhin ist in Fig.4 gut sichtbar, dass die die Wassertankdichtung 17 bildende Elastomerdichtung 16 eine Ringdichtung ist, die entlang ihrem Umfang gegenüber einer zentralen Achse A einen variierenden Radius R aufweist, so dass die eine Tankdichtfläche 18 bildende Innenfläche der Wassertankdichtung 17 radiale Einbuchtungen 19 und radiale Ausbuchtungen 20 umfasst. Die erste Tankdichtfläche 18 dient zugleich als erste Tankfixierfläche.

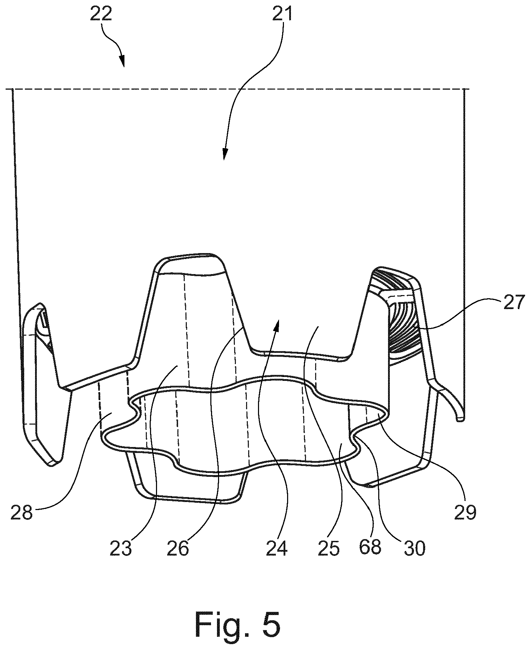

In Fig. 5 ist der Anschlussbereich 21 einer passenden Filterpatrone 22 gezeigt. Ein Filteranschlussstutzen 23 bildet einen inneren Ring der von einem äußeren Ring 24 mit axial verlaufenden Vorsprüngen 25 und Rücksprüngen 26 umgeben ist. Zwischen dem inneren Ring 23 und dem äußeren Ring 24 befindet sich ein ringförmiges Einlasssieb 27, durch das Wasser in die Filterpatrone gelangt. Die Außenfläche 28 und die Innenfläche 68 des Filteranschlussstutzens 23 sind passend zur Tankdichtfläche 18 ebenfalls mit Ausbuchtungen 29 und Einbuchtungen 30 versehen. Die Außenfläche 28 und/oder die Innenfläche 68 des Filteranschlussstutzens 23 können zugleich als Filterfixierfläche dienen.

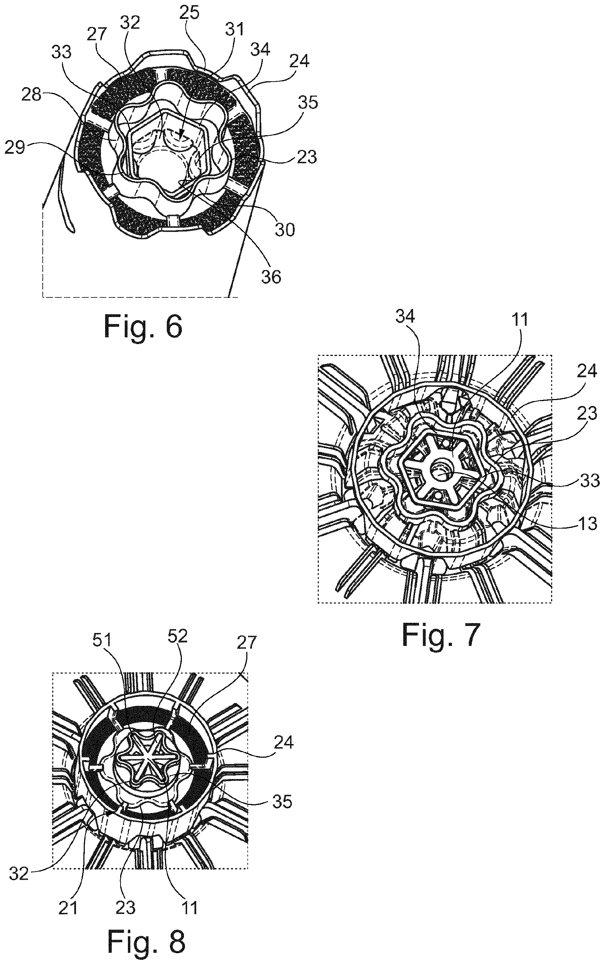

In der Ansicht von Fig. 6 ist neben den oben beschriebenen Teilen des Anschlussbereiches 21 der Filterpatrone 22 die besondere Ausgestaltung einer Führungsstruktur 31 der Filterpatrone 22 zur Aufnahme des Zentrierelementes 11 dargestellt. Die Führungsstruktur weist Führungsnuten 32 auf, die in Flucht zu den Kanten 33 eines Polygonringes 34, vorliegend beispielhaft mit sechs Führungsnuten in Flucht zu sechs Kanten eines sechskantförmigen Ringes liegen. In der Schnittdarstellung mit Blick von oben nach Fig. 7 geht die Schnittebene durch diesen Polygonring 34.

Nach oben in das Innere der Filterpatrone schließen sich Innenwölbungen 35 an die zwischen den Kanten 33 und den Führungsnuten 32 liegen. Die Innenwölbungen 35 bilden die seitlichen Wandungen 36 der Führungsnuten 32 aus. Durch diese gewölbte Form verjüngen sich die Wandungen 36 der Führungsnuten 32 sowohl in axialer Richtung nach oben hin (bezogen auf die Betriebsstellung) und in radiale Richtung von innen nach außen. In der Schnittstelle, mit Blick von oben gemäß Fig. 8 verläuft die Schnittebene auf einer Höhe, in der die Führungsnuten 32 deutlich ausgebildet sind. Zentral schließt sich innen eine Steigleitung 37 an, durch die das in die Filterpatrone 22 eintretenden Wasser nach oben zur Filterstrecke geleitet wird.

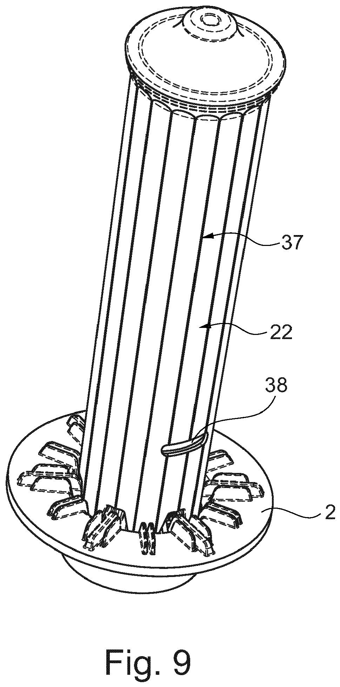

In Fig. 9 ist die gesamte Filterpatrone 22 dargestellt. In einem Filtergehäuse 37, das eine optionale seitliche Dosieröffnung 38 und den beschriebenen bodenseitigen Wasseranschluss aufweist. Die optionale Dosieröffnung 38 ist nur im Falle einer Ausführung der Filterpatrone vorgesehen, die für die Abgabe von Zusatzstoffen, z. B. Mineralien, Vitaminen oder dgl., aus einer im Filtergehäuse 37 untergebrachten Dosierkammer in den Wasservorrat ausgebildet ist. Da eine solche Dosierkammer innerhalb des Filtergehäuses 37 gegenüber der Filterstrecke geschlossen ist, hat diese keine weitere Bedeutung bezüglich der Filtration. Eine erfindungsgemäße Filterpatrone kann also ohne weiteres auch ohne diese Dosierkammer und deren Dosieröffnung 38 ausgebildet sein. In Fig. 9 ist insbesondere die Betriebsposition erkennbar, auf die sich die Angaben oben und unten in dieser Beschreibung beziehen.

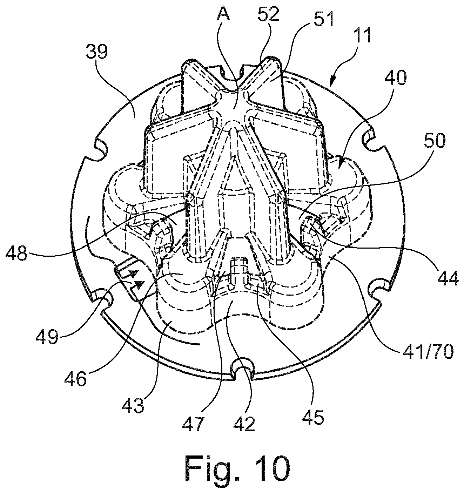

In Fig. 10 ist eine perspektivische Darstellung des Zentrierelementes 11 zu sehen. Das Zentrierelement ist mit einer Bodenplatte 39 versehen, die in montiertem Zustand in einer Aufnahme der Elastomerdichtung liegend diese randseitig hintergreift. Von der Bodenplatte 39 steht ein Zentrierdorn 40 nach oben ab, der eine ringförmige Außenfläche 41 aufweist, die auch eine zweite Tankfixierfläche bildet. Diese Außenfläche 41 weist einen entlang des Umfangs variierenden Radius gegenüber der zentralen Achse A auf, so dass auch diese Außenfläche 41 radiale Einbuchtungen 42 und Ausbuchtungen 43 umfasst. Die Außenfläche 41 ist so an eine entsprechende Form des Filteranschlussstutzens 9 angepasst.

Zur weiteren Anpassung sind auch die Einbuchtungen 42 und Ausbuchtungen 43 dieser Außenfläche 41 periodisch um eine Kreislinie oszillierend ausgebildet und weisen einen runden Verlauf auf. In der dargestellten Ausführung sind entsprechend der Gestaltung der dargestellten Ausführung der Filterpatrone 22 sechs Einbuchtungen 42 und sechs Ausbuchtungen 43 entlang einer Kreislinie mit einem Durchmesser kleiner 3 cm vorgesehen. Bei einer anderen Filterpatrone ist die Anpassung der Außenfläche 41 bzw. der zweiten Tankfixierfläche entsprechend passend abzuändern.

Alle Anpassungen der Außenfläche 41 des Zentrierdorns 11 führen dazu, dass in eingebautem Zustand nur ein ringförmiger Schlitz zwischen der Außenfläche 41 und der Elastomerdichtung 16 zum Einführen des Filteranschlussstutzens 23 offen ist. Dadurch ergibt sich eine weitere Kodierung gegen die Verwendung einer nicht geeigneten Filterpatrone. Zudem ist auf diese Weise eine Abstützung des Filteranschlussstutzens 23 auf dessen Innenseite an der Außenfläche 41 des Zentrierdorns 11 möglich. So kann um der Anpressdruck des Filteranschlussstutzens auf die Elastomerdichtung 16 über die variierende Form entlang der gesamten Umfangsform gleichmäßig erhöht werden.

Oberhalb der ringförmigen Außenfläche ist wenigstens ein nach oben abstehender Zahn 44 vorgesehen. Der eine oder die mehrere Zähne 44 sind auf einer Abstufung 45 des Zentrierdorns 40 angebracht. Weitere, der Form der Außenfläche 41 folgende Erhöhungen 46 gegen über der Abstufung 45 sind mit einem Abstand zu den Zähnen 44 angebracht, so dass zwischen den Zähnen und den Erhöhungen 46 eine Lücke 47 verbleibt. Der Zahn oder die Zähne 44 und/oder die Erhöhungen 46 können den Einsatz einer axialen Dichtung zur Umgehung der Kodierung verhindern. Oberhalb der Außenfläche 41 ist weiterhin eine Durchlassöffnung 48 vorgesehen, die in montiertem Zustand des Zentrierelementes 11 zu einer Tankdurchlassöffnung führt. Durch diese Durchlassöffnung 48 kann das filtrierte Wasser einer Filterpatrone 22 aus dem Wassertank abgeführt werden.

Eine oder mehrere Bodendurchlassöffnungen 49 sind unterhalb der Außenfläche 41 in der Bodenplatte 39 vorgesehen. Durch diese Bodenöffnungen kann ungefiltertes Wasser aus dem Wassertank geleitet werden. Unterhalb der Erhöhungen 46 und innerhalb der die Außenfläche 41 tragenden Wand ergibt sich ein Hohlraum 50 für die Aufnahme des Tankventilkörpers 13.

Oberhalb der ringförmigen Außenfläche 41 sind Führungsrippen 51 vorgesehen, die an ihrer Oberseite wie im dargestellten Ausführungsbeispiel abgeschrägt sein können. Die so gebildeten Führungsschrägen 52 helfen beim Einführen der Führungsrippen 51 in die Führungsnuten 32 einer Filterpatrone 22. In der Schnittdarstellung nach Fig. 4 sind die Führungsschrägen 52 der Führungsrippen 51 in der aufgesteckten Filterpatrone 22 gut zu erkennen.

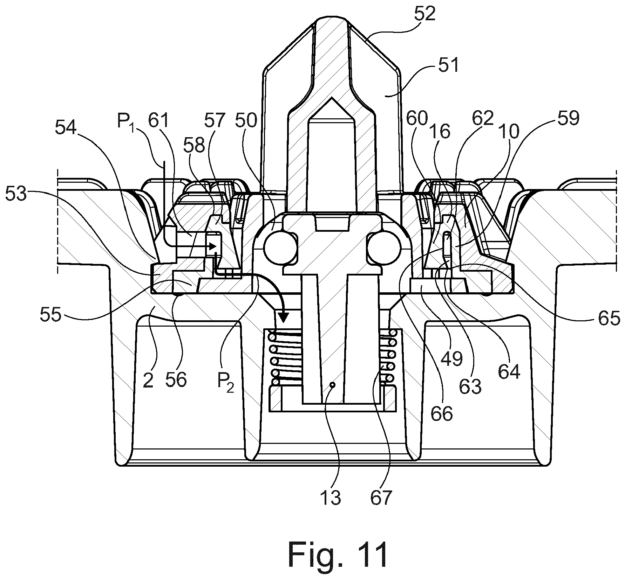

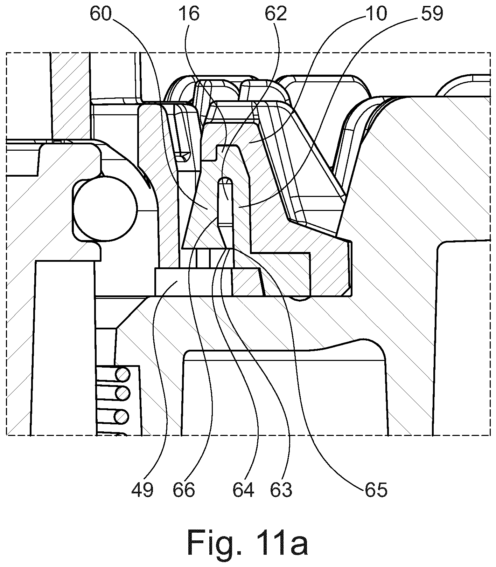

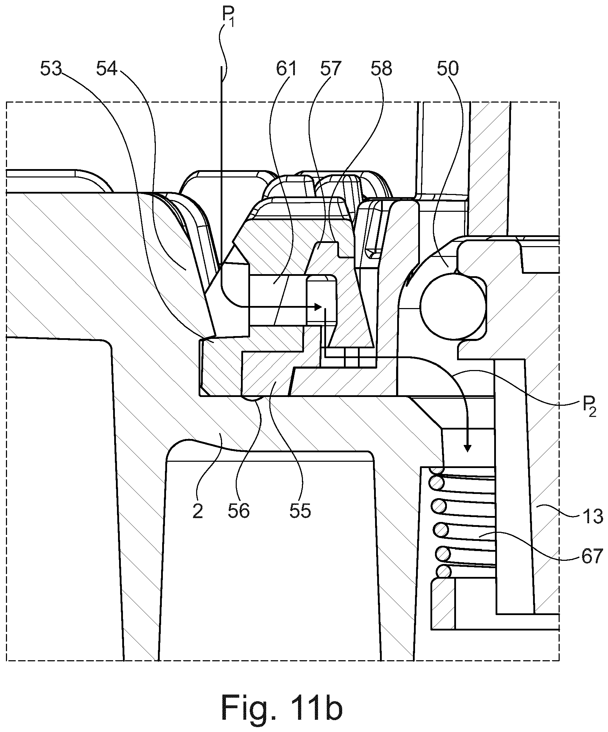

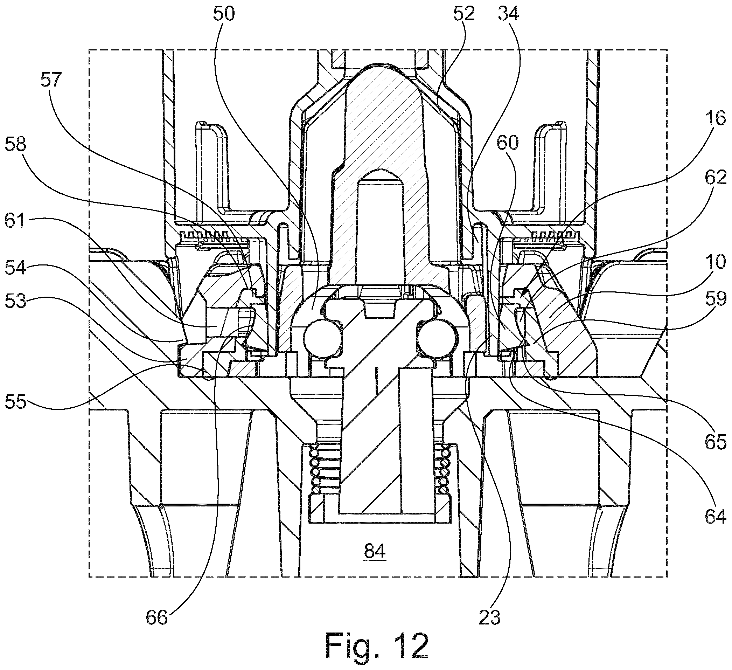

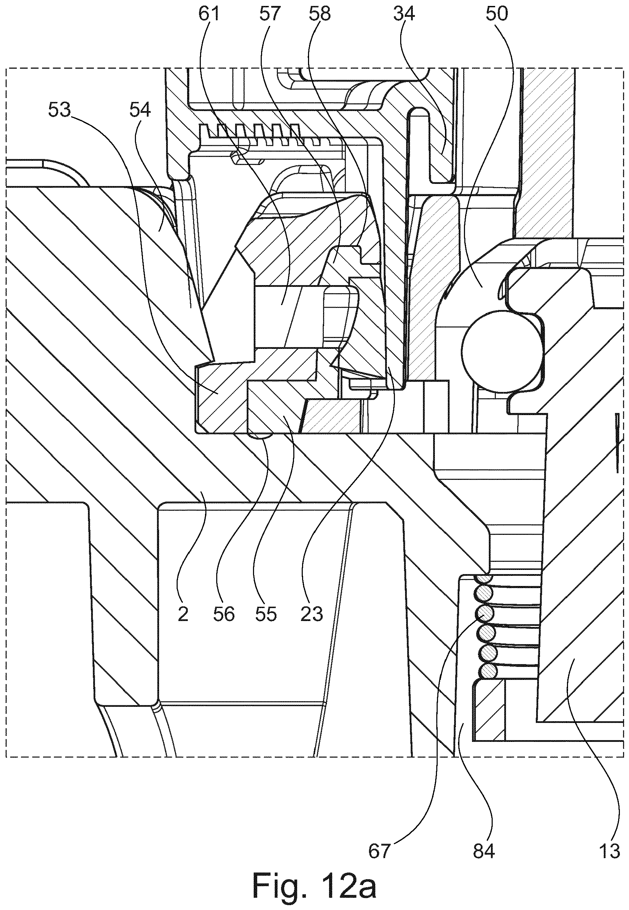

In den Fig. 11, 11a, 11b, 12 und 12a sind die zusammengebauten Bauteile des Wassertanks 1 für den Anschluss einer Filterpatrone ohne und mit Filterpatrone 22 dargestellt. Der Befestigungsring 10 ist mit einem Rastvorsprung 53 versehen, mit dem er am Tankboden 2 verrasten kann, indem er eine Bodenrippe 54 des Wassertanks hintergreift. Die Elastomerdichtung 16 hat einen Bodenabschnitt 55, der den Befestigungsring 10 untergreift und so die Elastomerdichtung 16 mit dem Befestigungsring 10 am Tankboden 2 hält.

Für die Abdichtung gegenüber dem Tankboden 2 weist die Elastomerdichtung 16 eine Dichtfläche auf, die vorliegend durch einen Dichtwulst 56 realisiert ist. Für den dichten Abschluss der Elastomerdichtung 16 gegenüber dem Befestigungsring 10 kann eine umlaufende Dichtfläche an verschiedenen Stellen vorgesehen werden. Im dargestellten Ausführungsbeispiel ist eine oben an der Elastomerdichtung 16 angeformte Ringdichtung 57 vorgesehen, die in einer Dichtnut 58 des Befestigungsrings mit diesem dichtet.

Die Elastomerdichtung 16 umfasst einen Außenring 59 und einen Innenring 60, die einstückig miteinander ausgeformt und verbunden sind. Der Außenring 59 und der Innenring 60 folgen beide in ihrer Form entlang dem Umfang dem variierenden Radius des Befestigungsrings 10, des Filteranschlussstutzens 23 und der Elastomerdichtung 16 und den dadurch gebildeten Einbuchtungen und Ausbuchtungen. Der Außenring 59 ist abgestuft und trägt die Ringdichtung 57 sowie den Dichtwulst 56. Der Außenring 59 ist weiterhin mit einer oder mehreren Bypassöffnungen 61 versehen, durch die ungefiltertes Wasser in Fließrichtung P1 in den Ringspalt 62 zwischen dem Außenring 59 und dem Innenring 60 gelangen kann. Die Bypassöffnung 61 der Elastomerdichtung 16 liegt in montiertem Zustand unmittelbar im Anschluss an eine Bypassöffnung 63 im Befestigungsring 11, die z.B. auch in den Fig. 1 und 3 zu sehen ist. Durch die Bypassöffnung 63 kann in Richtung P2 ungefiltertes Wasser aus dem Ringspalt 62 aus dem Wassertank 1 in die entsprechende Getränkemaschine fließen.

Der Innenring 60 weist an seiner Unterseite eine Dichtlippe 64 auf, der am Außenring 59 eine Dichtfläche 65 gegenüberliegt. Im entspannten Zustand der Elastomerdichtung 16 ist der Ringspalt 62 zwischen dem Außenring 59 und dem Innenring 60 unten offen, wie in Fig. 11 zu sehen ist, so dass das im Bypass geführte ungefilterte Wasser aus dem Ringspalt 62 in Fließrichtung P2 abfließen kann. In diesem Zustand ist die Innenseite 66 des Innenrings 60, die die Wassertankdichtung 17 bildet, im Verlauf nach unten nach innen abgeschrägt. Die Ausgestaltung des Bypasses ist in den Vergrößerungen gemäß den Fig. 11a und b hervorgehoben.

Beim Einsetzen einer Filterpatrone 22 mit dem Filteranschlussstutzen 23 wird die Elastomerdichtung 16 verformt, so dass die Innenseite 66 nach außen gedrückt wird und im Wesentlichen senkrecht entlang dem Filteranschlussstutzen verläuft. Dabei wird die Dichtlippe 64 auf die gegenüberliegende Dichtfläche 65 gedrückt und somit der Ringspalt 62 und damit auch der Bypass durch die Bypassöffnungen 61, 63 geschlossen. Durch die Verformung wird ein Anpressdruck erzeugt, der die Tankdichtfläche 17 an die Filterdichtfläche 28 und zugleich die Dichtlippe 64 auf die Dichtfläche 65 drückt. Dieser Zustand ist in Fig. 12 und Fig. 12a gezeigt.

Der Tankventilkörper 13 ist sowohl in Fig. 11 als auch in Fig. 12 durch einen nicht näher gezeigten Anschlag der zugehörigen Maschine gegen eine Rückstellfeder 67 in den Hohlraum 50 angehoben und so in der geöffneten Stellung, die dem eingesetzten Wassertank entspricht. Wird der Wassertank aus der Maschine entfernt, schließt der Tankventilkörper 13 unter dem Druck der Rückstellfeder 67.

Die Tankdichtfläche 18 wird durch die Innenseite 66 der Elastomerdichtung 16 gebildet und stellt zugleich eine erste Tankfixierfläche 18 dar. An dieser Seite liegt wie bereist o.a. eine durch die Filterdichtfläche 28 gebildete erste Filterfixierfläche 28 im eingesteckten Zustand der Filterpatrone 5,22 unter einem Anpressdruck an, der die Elastomerdichtung 16 so verformt, dass ein fixierender und dichtender Formschluss zustande kommt.

An der die zweite Tankfixierfläche bildenden Außenfläche 41 liegt dabei eine zweite Filterfixierfläche 68 (s. Fig. 5) an, die durch die Innenfläche des Filteranschlussstutzens 23 gebildet wird. Dieser Formschluss wird ebenfalls unter einem Anpressdruck ausgebildet. Durch die erfindungsgemäße Formgebung des Filteranschlussstutzens 23 bildet dieser eine ringförmige Wand 69 aus, die bei Bedarf federnd geweitet werden kann. Dadurch ergibt sich die Möglichkeit eines Toleranzausgleiches bei einer guten Fixierung, die durch die entsprechende Verspannung bewirkt wird. Durch die beiderseitige parallele oder zueinander geneigte Formgebung der ersten Filterfixierfläche 28 und einer zweiten Filterfixierfläche 68 bildet die dazwischen liegende ringförmige, gewellte Wand 69 des Anschlussstutzens 23 eine gewellte Ringfeder 70. Die zweite Filterfixierfläche 68 kann dabei auch als zweite Filterdichtfläche wirken.

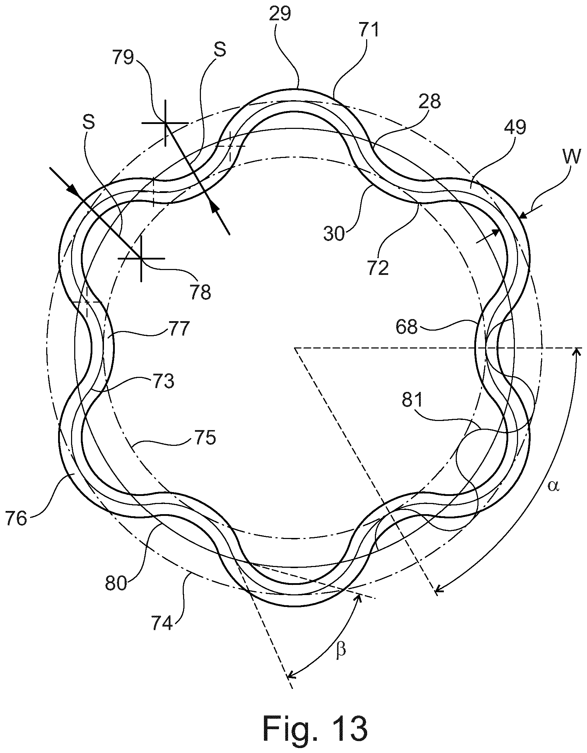

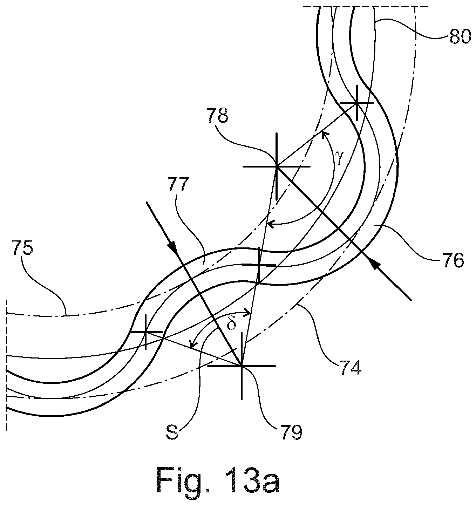

Der Filteranschlussstutzen gemäß der Stirnansicht Fig. 13 sowie der Ausschnittvergrößerung gemäß Fig. 13a zeigt die beschriebene Wellenform mit Ausbuchtungen 29 und Einbuchtungen 30. Die ringförmige Wand 69 des Filteranschlussstutzens 23 mit einer Wandstärke W weist an der Wandaußenseite 71 die erste Filterfixierfläche 28 und auf der Wandinnenseite 72 die zweite Filterfixierfläche 68 auf. Die Wandaußenseite 71 und die Wandinnenseite 72 verlaufen in der dargestellten Ansicht parallel, sind jedoch in axialer Richtung zueinander hin abgeschrägt, was weiter unten noch erläutert wird. Die Wellenform wird daher anhand einer gestrichelt dargestellten Mittellinie 73 weiter veranschaulicht.

Die Mittellinie 73 verläuft wellenförmig zwischen einem äußeren Hüllkreis 74 dessen Radius den größten Wert des variierenden Radius aufweist, und einem inneren Hüllkreis 75, dessen Radius den kleinsten Radius des variierenden Radius der Wellenform aufweist. Die Ausbuchtungen 29 und Einbuchtungen 30 der Mittelinie 73 bilden Wellenberge in der Form konvexer Kreissegmente 76 und Wellentäler in der Form konkaver Kreissegmente 77. In der dargestellten Ausführung zeigen alle Kreissegmente 76, 77 den gleichen Segmentradius S. Die Mittelpunkte 78, 79 der Kreissegmente 76, 77 liegen für die konvexen Kreissegmente 76 innerhalb des inneren Hüllkreises 75 und für die konkaven Kreissegmente 77 außerhalb des äußeren Hüllkreises 74. Die konvexen Kreissegmente 76 und die konkaven Kreissegmente 77 gehen tangential ineinander über und sind gleichmäßig über den Umfang verteilt, so dass sich eine drehsymmetrische Form ergibt. Im dargestellten Ausführungsbeispiel sind jeweils sechs konvexe Kreissegmente 76 und sechs konkave Kreissegmente 77 vorgesehen, die alternierend in einem Winkelabstand von 30° liegen, d.h. die konvexen Kreissegmente 76 liegen zueinander um einen Winkel α von 60° auseinander und die konkaven Kreissegmente 77 ebenso.

Durch die Wahl des Segmentradius und die damit einhergehende Position der zugehörigen Mittelpunkte 78, 79 verläuft die Mittelinie vergleichsweise flach gewölbt, wellenförmig um die Mittelkreislinie 80 herum. Die Mittellinie 73 schneidet die Mittelkreislinie 80 unter einem stumpfen Winkel β. Hierdurch ist die Bogenlänge der Ausbuchtungen 29 deutlich länger als die Bogenlänge der Einbuchtungen 30, wodurch der von dem Segmentbogen der Ausbuchtungen 29 überstrichene Winkel γ deutlich größer ist als der von den Einbuchtungen 30 überstrichene Winkel δ. Diese Form verbessert die Federwirkung des Filteranschlussstutzens 23.

Zum Vergleich sind in der Zeichnung noch Kreissegmente 81 dargestellt, deren Segmentmittelpunkte 82 direkt auf der Mittellinie 73 liegen. Dieser in dieser Ausführungsform nicht realisierte Verlauf weist deutlich kleinere Segmentradien und einen im Wesentlichen senkrechten Verlauf zur Mittellinie 73 auf.

Eine gute Federwirkung hat sich bei Radien und Wandstärken gezeigt, bei denen der Radius des inneren Hüllkreises 75 zwischen 5% und 15% des Radius des äußeren Hüllkreises 74 und der Radius der konvexen und/oder konkaven Kreissegmente zwischen 20% und 35% des Radius des äußeren Hüllkreises 74 liegt. Die Wandstärke W zwischen der Wandaußenseite 71 und der hierzu (bezogen auf die Betriebsposition) parallel oder geneigt verlaufenden Wandinnenseite 72 liegt bevorzugt zwischen 5% und 15% des Radius des äußeren Hüllkreises 74.

Im dargestellten Beispiel weist der äußere Hüllkreis 74 einen Radius von ca. 11 mm und der innere Hüllkreis 75 einen Radius von ca. 9,75 mm auf. Dabei beträgt der Segmentradius der konvexen und konkaven Kreissegmente ca. 3,08 mm und die Wandstärke zwischen der Wandaußenseite 71 und der hierzu parallel oder geneigt verlaufenden Wandinnenseite 72 ca. 0,9 mm.

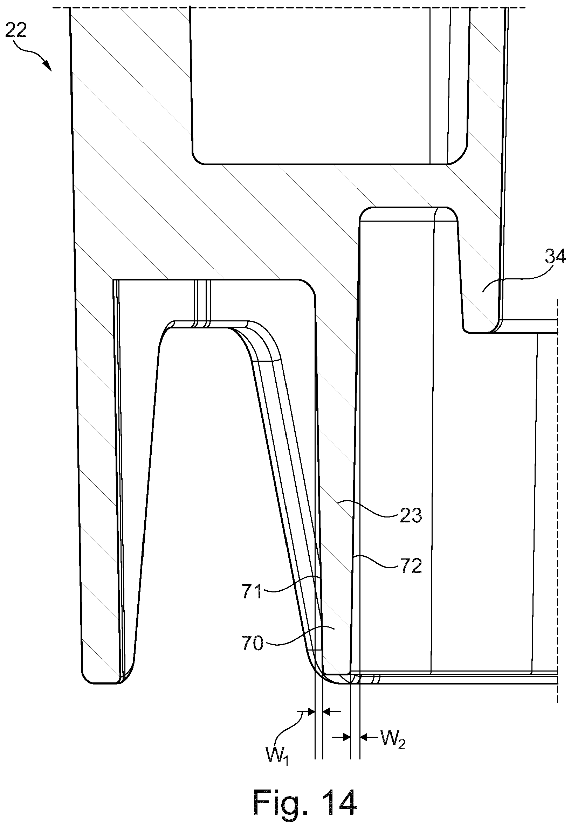

In Fig. 14 ist zu erkennen, dass die Außen 71 - und/oder die Innenwand 72 des Filteranschlussstutzens 23, die je nach Ausführungsform auch eine oder zwei Filterdichtflächen 28 bilden, gegenüber der Vertikalen um die Winkel ω1 oder ω2 abgeschrägt sind, so dass sie bezogen auf die Betriebsposition der Filterpatrone 4, 22 von oben nach unten zusammenlaufen. Diese Abschrägung oder Abschrägungen um den oder die Winkel ω1 und/oder ω2 bilden eine Einführhilfe beim Einführen des Anschlussstutzens 23 in den Ringspalt zwischen der Elastomerdichtung 16 und der Außenfläche 41 des Wassertanks 1.

### Bezugszeichenliste:

1 Wassertank
2 Tankboden
3 Wassertankseitenwand
4 Filterpatrone
5 Filtergehäuse
6 Tankanschlusselement
7 Filteranschluss
8 Innenraum
9 Filteranschlussstutzen
10 Befestigungsring
11 Zentrierelement
12 Vertiefung
13 Tankventilkörper
14 Dichtung
15 Pin
16 Elastomerdichtung
17 Wassertankdichtung/Ringdichtung
18 Tankdichtfläche
19 Einbuchtung
20 Ausbuchtung
21 Anschlussbereich
22 Filterpatrone
23 Filteranschlussstutzen/innerer Ring
24 Äußerer Ring
25 Vorsprung
26 Rücksprung
27 Einlasssieb
28 Filterdichtfläche/Außenfläche
29 Ausbuchtung
30 Einbuchtung
31 Führungsstruktur
32 Führungsnut
33 Kante
34 Polygonring
35 Innenwölbung
36 Wandung
37 Filtergehäuse
38 Dosieröffnung
39 Bodenplatte
40 Zentrierdorn
41 Außenfläche
42 Einbuchtung
43 Ausbuchtung
44 Zahn
45 Abstufung
46 Erhöhung
47 Lücke
48 Durchlassöffnung
49 Bodendurchlassöffnung
50 Hohlraum
51 Führungsrippe
52 Führungsschräge
53 Rastvorsprung
54 Bodenrippe
55 Bodenabschnitt
56 Dichtwulst
57 Ringdichtung
58 Dichtnut
59 Innenring
60 Außenring
61 Bypassöffnung
62 Ringspalt
63 Bypassöffnung
64 Dichtlippe
65 Dichtfläche
66 Innenseite
67 Rückstellfeder
68 Zweite Filterfixierfläche/Innenfläche
69 Wand
70 Ringfeder
71 Wandaußenseite
72 Wandinnenseite
73 Mittellinie
74 Äußerer Hüllkreis
75 Innerer Hüllkreis
76Konvexes Kreissegment
77 Konkaves Kreissegment
78 Mittelpunkt
79 Mittelpunkt
80 Mittelkreislinie
81 Kreissegment
82 Segmentmittelpunkt
83 Wendepunkt
84 Tankdurchgangsöffnung
A Achse
W Wandstärke
S Segmentradius
P1 Fließrichtung
P2 Fließrichtung

## Patentansprüche

1. Filterpatrone (4) für den Einsatz im Inneren eines Wassertanks einer Haushaltsmaschine, wie eine Getränkemaschine, insbesondere Kaffeemaschine, etc. mit einem Filtergehäuse (5), dessen Wandung eine Gehäuseinnenseite von einer Gehäuseaußenseite trennt, wobei eine im Betrieb der Filterpatrone (4) gegenüber der äußeren Umgebung des Filtergehäuses(5) offene Filtereinlassöffnung (27) vorgesehen ist, wobei, bezogen auf die Strömungsrichtung des Wassers im Betrieb, im Anschluss an die Filtereinlassöffnung (27) eine Vorrichtung zur Wasserleitung im Inneren des Filtergehäuses (5) vorgesehen ist, die wenigstens eine, wenigstens ein Filtermedium aufweisendes Filterkammer umfasst und in einer Filterausgangsleitung zum Absaugen von Wasser aus der Filterpatrone (4) endet, und
wobei ein Filteranschlussstutzen (9) mit einer ringförmigen Filterdichtfläche (28) für den Anschluss der Filterpatrone (4) in einem Wassertank vorgesehen ist, **dadurch gekennzeichnet, dass**
innerhalb der Filterdichtfläche (28) eine von dieser Filterdichtfläche (28) getrennt angeordnete filterseitige Führungsstruktur (31) zur Aufnahme eines Zentrierelementes (11) zur Zentrierung der Filterpatrone (4) vorgesehen ist und dass die filterseitige Führungsstruktur (31) eine Auslassleitung der Filterpatrone bildet, die stromabwärts am Ende der Filterstrecke angeordnet ist.

2. Filterpatrone nach Anspruch 1
**dadurch gekennzeichnet, dass** die filterseitige Führungsstruktur (31) eine oder mehrere schräg gegenüber der Montagerichtung der Filterpatrone (4) ausgerichtete Führungsschrägen (52) aufweist.

3. Filterpatrone nach einem der vorgenannten Ansprüche,
**dadurch gekennzeichnet, dass** die Führungsschrägen (52) als Zentrierhilfe auf eine zentrale Achse (A) der filterseitigen Führungsstruktur (31) hingerichtet sind.

4. Filterpatrone nach einem der vorgenannten Ansprüche,
**dadurch gekennzeichnet, dass** die filterseitige Führungsstruktur (31) koaxial zur Filterdichtfläche (28) ausgebildet und angeordnet ist.

5. Filterpatrone nach einem der vorgenannten Ansprüche,
**dadurch gekennzeichnet, dass** die filterseitige Führungsstruktur (31) eine oder mehrere zu eine zentralen Achse A parallel verlaufende Führungsflächen und/oder eine oder mehrere hierzu schräg angeordneten Führungsflächen aufweist.

6. Filterpatrone nach einem der vorgenannten Ansprüche
**dadurch gekennzeichnet, dass** Halte- oder Rastelemente in der filterseitige Führungsstruktur (31) angebracht sind.

7. Filterpatrone nach einem der vorgenannten Ansprüche
**dadurch gekennzeichnet, dass** ein mit einem Tankventilkörper (13) eines Tankventils bewegliches Steckelement (15) vorgesehen ist.

8. Filterpatrone nach einem der vorgenannten Ansprüche,
**dadurch gekennzeichnet, dass** die filterseitige Führungsstruktur (31) eine oder mehrere Führungsnuten (32) zur Aufnahme tankseitiger Strukturen aufweist.

9. Filterpatrone nach einem der vorgenannten Ansprüche,
**dadurch gekennzeichnet, dass** eine oder mehrere Führungsschrägen (52) der filterseitigen Führungsstruktur (31) in einer oder mehreren Führungsnuten (32) zur Aufnahme von tankseitiger Strukturen angebracht sind.

10. Wassertank (1) für eine Haushaltsmaschine mit einer Filterpatrone (4) nach einem der vorgenannten Ansprüche und mit einem Tankboden (2), wobei am Tankboden (2) eine ringförmige Tankdichtfläche (18) zum dichten Anschluss der Filterpatrone (4) vorgesehen ist, die eine Tankdurchgangsöffnung zum Durchfluss des Wassers aus der Filterpatrone (4) durch die Wandung des Tankbodens (2) zur Haushaltsmaschine umschließt,
**dadurch gekennzeichnet, dass**
ein innerhalb der Tankdichtfläche (18) vom Tankboden in Richtung der Montageposition der Filterpatrone (4) abstehendes Zentrierelement (11) zum Einstecken in die filterseitige Führungsstruktur der Filterpatrone vorgesehen ist und dass an dem Zentrierelement (11) wenigstens einen Wasserdurchlass für Wasser aus der Filterpatrone (4) durch die filterseitige Führungsstruktur (31) einer aufgesteckten Filterpatrone zur Tankdurchgangsöffnung vorgesehen ist.

11. Wassertank nach Anspruch 10,
**dadurch gekennzeichnet, dass** die Tankdichtfläche (18) separat vom Zentrierelement (11) ausgebildet und angeordnet ist.

12. Wassertank nach Ansprüche 10 und 11,
**dadurch gekennzeichnet, dass** das Zentrierelement (11) sich in Fließrichtung des Wassers im Betrieb erstreckende Rippen (32) umfasst, deren Zwischenraum einen Wasserdurchlass bilden.

13. Wassertank nach Ansprüche 10-12,
**dadurch gekennzeichnet, dass** das Zentrierelement (11) aus sternförmig angeordneten Rippen (32) besteht.

14. Wassertank nach Ansprüche 10-13,
**dadurch gekennzeichnet, dass** wenigstens eine Rippe (32) eine obere Führungsschräge (52) und/oder wenigstens eine zur zentralen Achse parallel verlaufende Führungsfläche zur Führung der filterseitigen Führungsstruktur (31) bei der Montage der Filterpatrone aufweist.

15. Wassertank nach Ansprüche 10-14,
**dadurch gekennzeichnet, dass** wenigstens eine Rippe (32) eine obere Führungsschräge (52) zur führenden Wechselwirkung mit wenigstens einer Führungsschräge von wenigstens einer Führungsnut (32) der filterseitigen Führungsstruktur (31) bei der Montage der Filterpatrone aufweist.

16. Wassertank nach Ansprüche 10-15,
**dadurch gekennzeichnet, dass** Halte- oder Rastelemente an dem Zentrierelement (11) angebracht sind.

17. Wassertank nach Ansprüche 10-16,
**dadurch gekennzeichnet, dass** ein Tankventil vorgesehen ist, das ein durch einen Durchlass des Zentrierelements (11) steckbares, mit einem Tankventilkörper (13) bewegliches Steckelement aufweist.

18. Wassertank nach Ansprüche 10-17,
**dadurch gekennzeichnet, dass** das Zentrierelement (11) an einem Befestigungsring (10) für den Tankboden (2) angebracht ist.

## Claims

1. Filter cartridge (4) for use in the interior of a water tank of a household appliance, such as a beverage machine, in particular a coffee machine, etc., having a filter housing (5), the wall of which separates a housing internal side from a housing external side, wherein a filter inlet opening (27) which in the operation of the filter cartridge (4) is open in relation to the external environment of the filter housing (5) is provided, wherein a device for water conduction which comprises at least one filter chamber having at least one filter medium and terminates in a filter outlet line for suctioning water from the filter cartridge (4) is provided in the interior of the filter housing (5), downstream of the filter inlet opening (27) relative to the flow direction of the water during operation, and wherein a filter port (9) which has an annular filter sealing face (28) for the connection of the filter cartridge (4) in a water tank is provided,
**characterized in that**
within the filter sealing face (28) a filter-proximal guide structure (31), disposed separately from this filter sealing face (28), for receiving a centring element (11) for centring the filter cartridge (4) is provided, and **in that** the filter-proximal guide structure (31) forms an outlet line of the filter cartridge, which is disposed downstream at the end of the filter section.

2. Filter cartridge according to Claim 1,
**characterized in that** the filter-proximal guide structure (31) has one or a plurality of guide ramps (52) aligned obliquely in relation to the assembly direction of the filter cartridge (4).

3. Filter cartridge according to one of the preceding claims,
**characterized in that** the guide ramps (52) as a centring aid are directed toward a central axis (A) of the filter-proximal guide structure (31).

4. Filter cartridge according to one of the preceding claims,
**characterized in that** the filter-proximal guide structure (31) is configured and disposed coaxially with the filter sealing face (28).

5. Filter cartridge according to one of the preceding claims,
**characterized in that** the filter-proximal guide structure (31) has one or a plurality of guide faces running parallel to a central axis A and/or one or a plurality of guide faces disposed at an oblique angle thereto.

6. Filter cartridge according to one of the preceding claims,
**characterized in that** holding or latching elements are fitted in the filter-proximal guide structure (31).

7. Filter cartridge according to one of the preceding claims,
**characterized in that** a plug-in element (15) which is movable by a tank valve body (13) of a tank valve is provided.

8. Filter cartridge according to one of the preceding claims,
**characterized in that** the filter-proximal guide structure (31) has one or a plurality of guide grooves (32) for receiving tank-proximal structures.

9. Filter cartridge according to one of the preceding claims,
**characterized in that** one or a plurality of guide ramps (52) of the filter-proximal guide structure (31) are fitted in one or a plurality of guide grooves (32) for receiving tank-proximal structures.

10. Water tank (1) for a household appliance having a filter cartridge (4) according to one of the preceding claims and having a tank bottom (2), wherein an annular tank sealing face (18) is provided on the tank bottom (2) for the tight connection of the filter cartridge (4), and encloses a tank passage opening for the water to flow from the filter cartridge (4) through the wall of the tank bottom (2) to the household appliance,
**characterized in that**
a centring element (11) protruding from the tank bottom inside the tank sealing face (18) in the direction of the assembly position of the filter cartridge (4) is provided for insertion into the filter-proximal guide structure of the filter cartridge, and **in that** the centring element (11) is provided with at least one water passage for water from the filter cartridge (4) through the filter-proximal guide structure (31) of an attached filter cartridge to the tank passage opening.

11. Water tank according to Claim 10,
**characterized in that** the tank sealing face (18) is configured and disposed separately from the centring element (11).

12. Water tank according to Claims 10 and 11, **characterized in that** the centring element (11) comprises ribs (32) which extend in the flow direction of the water during operation, the intermediate space of said ribs forming a water passage.

13. Water tank according to Claims 10 to 12, **characterized in that** the centring element (11) consists of ribs (32) disposed in a star shape.

14. Water tank according to Claims 10 to 13, **characterized in that** at least one rib (32) has an upper guide ramp (52) and/or at least one guide face running parallel to the central axis for guiding the filter-proximal guide structure (31) during assembly of the filter cartridge.

15. Water tank according to Claims 10 to 14, **characterized in that** at least one rib (32) has an upper guide ramp (52) for the guiding interaction with at least one guide ramp of at least one guide groove (32) of the filter-proximal guide structure (31) during assembly of the filter cartridge.

16. Water tank according to Claims 10 to 15, **characterized in that** holding or latching elements are attached to the centring element (11).

17. Water tank according to Claims 10 to 16, **characterized in that** a tank valve is provided which has a plug-in element which can be inserted through a passage in the centring element (11) and is movable by a tank valve body (13).

18. Water tank according to Claims 10 to 17, **characterized in that** the centring element (11) is attached to a fastening ring (10) for the tank bottom (2) .

## Revendications

1. Cartouche filtrante (4) pour utilisation à l'intérieur d'un réservoir d'eau d'un appareil ménager, comme une machine à boissons, notamment une machine à café, etc. avec un boîtier de filtre (5) dont la paroi sépare un côté intérieur de boîtier d'un côté extérieur de boîtier, une ouverture d'entrée de filtre (27) ouverte par rapport à l'environnement extérieur du boîtier de filtre (5) étant prévue pendant le fonctionnement de la cartouche filtrante (4) ; par rapport à la direction d'écoulement de l'eau pendant le fonctionnement, il étant prévu à la suite de l'ouverture d'entrée de filtre (27) un dispositif de conduite d'eau à l'intérieur du boîtier de filtre (5), qui comprend au moins une chambre de filtre présentant au moins un milieu filtrant et se termine par une conduite de sortie de filtre pour l'aspiration de l'eau hors de la cartouche filtrante (4), et une tubulure de raccordement de filtre (9) avec une surface d'étanchéité de filtre annulaire (28) étant prévue pour le raccordement de la cartouche filtrante (4) dans un réservoir d'eau, **caractérisée en ce qu'**à l'intérieur de la surface d'étanchéité de filtre (28) est prévue une structure de guidage (31) côté filtre, agencée séparément de cette surface d'étanchéité de filtre (28), pour recevoir un élément de centrage (11) pour le centrage de la cartouche filtrante (4), et **en ce que** la structure de guidage (31) côté filtre forme une conduite de sortie de la cartouche filtrante, qui est agencée en aval à l'extrémité du trajet de filtration.

2. Cartouche filtrante selon la revendication 1, **caractérisée en ce que** la structure de guidage (31) côté filtre présente une ou plusieurs pentes de guidage (52) orientées obliquement par rapport à la direction de montage de la cartouche filtrante (4).

3. Cartouche filtrante selon l'une quelconque des revendications précédentes, **caractérisée en ce que** les pentes de guidage (52) sont dirigées comme aide au centrage vers un axe central (A) de la structure de guidage (31) côté filtre.

4. Cartouche filtrante selon l'une quelconque des revendications précédentes, **caractérisée en ce que** la structure de guidage (31) côté filtre est réalisée et agencée coaxialement à la surface d'étanchéité de filtre (28) .

5. Cartouche filtrante selon l'une quelconque des revendications précédentes, **caractérisée en ce que** la structure de guidage (31) côté filtre présente une ou plusieurs surfaces de guidage parallèles à un axe central A et/ou une ou plusieurs surfaces de guidage agencées obliquement par rapport à celui-ci.

6. Cartouche filtrante selon l'une quelconque des revendications précédentes, **caractérisée en ce que** des éléments de retenue ou d'encliquetage sont montés dans la structure de guidage (31) côté filtre.

7. Cartouche filtrante selon l'une quelconque des revendications précédentes, **caractérisée en ce qu'**il est prévu un élément enfichable (15) mobile avec un corps de soupape de réservoir (13) d'une soupape de réservoir.

8. Cartouche filtrante selon l'une quelconque des revendications précédentes, **caractérisée en ce que** la structure de guidage (31) côté filtre présente une ou plusieurs rainures de guidage (32) pour recevoir des structures côté réservoir.

9. Cartouche filtrante selon l'une quelconque des revendications précédentes, **caractérisée en ce qu'**une ou plusieurs pentes de guidage (52) de la structure de guidage (31) côté filtre sont disposées dans une ou plusieurs rainures de guidage (32) pour recevoir des structures côté réservoir.

10. Réservoir d'eau (1) pour un appareil ménager avec une cartouche filtrante (4) selon l'une quelconque des revendications précédentes et avec un fond de réservoir (2), une surface d'étanchéité de réservoir (18) annulaire étant prévue sur le fond de réservoir (2) pour le raccordement étanche de la cartouche filtrante (4), qui entoure une ouverture de passage de réservoir pour le passage de l'eau provenant de la cartouche filtrante (4) à travers la paroi du fond de réservoir (2) vers l'appareil ménager,
**caractérisé en ce qu'**il est prévu un élément de centrage (11) faisant saillie à l'intérieur de la surface d'étanchéité de réservoir (18) depuis le fond de réservoir en direction de la position de montage de la cartouche filtrante (4) pour l'enfichage dans la structure de guidage côté filtre de la cartouche filtrante et **en ce qu'**il est prévu sur l'élément de centrage (11) au moins un passage d'eau pour l'eau provenant de la cartouche filtrante (4) à travers la structure de guidage (31) côté filtre d'une cartouche filtrante enfichée vers l'ouverture de passage de réservoir.

11. Réservoir d'eau selon la revendication 10, **caractérisé en ce que** la surface d'étanchéité de réservoir (18) est réalisée et agencée séparément de l'élément de centrage (11).

12. Réservoir d'eau selon les revendications 10 et 11, **caractérisé en ce que** l'élément de centrage (11) comprend des nervures (32) s'étendant dans la direction d'écoulement de l'eau pendant le fonctionnement, dont l'espace intermédiaire forme un passage d'eau.

13. Réservoir d'eau selon les revendications 10 à 12, **caractérisé en ce que** l'élément de centrage (11) est constitué de nervures (32) agencées en étoile.

14. Réservoir d'eau selon les revendications 10 à 13, **caractérisé en ce qu'**au moins une nervure (32) présente une pente de guidage supérieure (52) et/ou au moins une surface de guidage parallèle à l'axe central pour guider la structure de guidage (31) côté filtre lors du montage de la cartouche filtrante.

15. Réservoir d'eau selon les revendications 10 à 14, **caractérisé en ce qu'**au moins une nervure (32) présente une pente de guidage supérieure (52) pour interagir de manière guidée avec au moins une pente de guidage d'au moins une rainure de guidage (32) de la structure de guidage (31) côté filtre lors du montage de la cartouche filtrante.

16. Réservoir d'eau selon les revendications 10 à 15, **caractérisé en ce que** des éléments de retenue ou d'encliquetage sont disposés sur l'élément de centrage (11) .

17. Réservoir d'eau selon les revendications 10 à 16, **caractérisé en ce qu'**il est prévu une soupape de réservoir qui présente un élément enfichable pouvant être enfiché à travers un passage de l'élément de centrage (11), mobile avec un corps de soupape de réservoir (13).

18. Réservoir d'eau selon les revendications 10 à 17, **caractérisé en ce que** l'élément de centrage (11) est disposé sur un anneau de fixation (10) pour le fond de réservoir (2).
